# EUROPEAN PATENT SPECIFICATION

(11) **EP 4 560 267 B1**
(45) Date of publication and mention of the grant of the patent: **29.04.2026**
(21) Application number: 23211066.8
(22) Date of filing: 21.11.2023
(51) Int. Cl.: G01D 5/14, G01D 3/08

(54) **LINEAR MAGNETIC POSITION SENSOR CIRCUIT**
LINEARE MAGNETISCHE POSITIONSSENSORSCHALTUNG
CIRCUIT DE CAPTEUR DE POSITION MAGNÉTIQUE LINÉAIRE

(43) Date of publication of application: 28.05.2025
(73) Proprietor: Melexis Technologies SA, 2022 Bevaix (CH)
(72) Inventor: LÁZÁR, Zsombor, 2022 Bevaix (CH); DEPOORTER, Jean-Claude, 3980 Tessenderlo (BE)
(74) Representative: Winger

(56) References cited:
- US-A1- 2020 149 925
- US-A1- 2021 199 730
- US-A1- 2023 100 898

## Description

### Field of the invention

The present invention is generally related to the field of linear magnetic position sensors and methods for determining the position of a magnet along a stroke.

### Background of the invention

Position sensors are known in the art. By measuring the strength of a magnetic field generated by one or more magnet(s) at various locations, the position or orientation of the magnet(s) relative to the sensor elements can be determined.

In general field sensors are subject to measurement error due to external perturbation magnetic fields (also known as stray fields) that are unrelated to the field of which measurement is desired. For example, a compass is intended to measure the earth's magnetic field but can be affected by local magnetic field sources, such as motors or other electrical machinery that produce stray magnetic fields. Conversely, a magnetic sensor designed to measure the variation of the magnetic field produced by a magnet can be affected by the earth's magnetic field, fields from other unrelated electrical machinery or electromagnetic interference. Hence, stray field rejection is in general an important attribute of practical field sensor designs, such as for example position sensors. One technique to improve the immunity to magnetic stray fields is to apply differential sensing. This approach is disclosed in US2023/100898 A1.

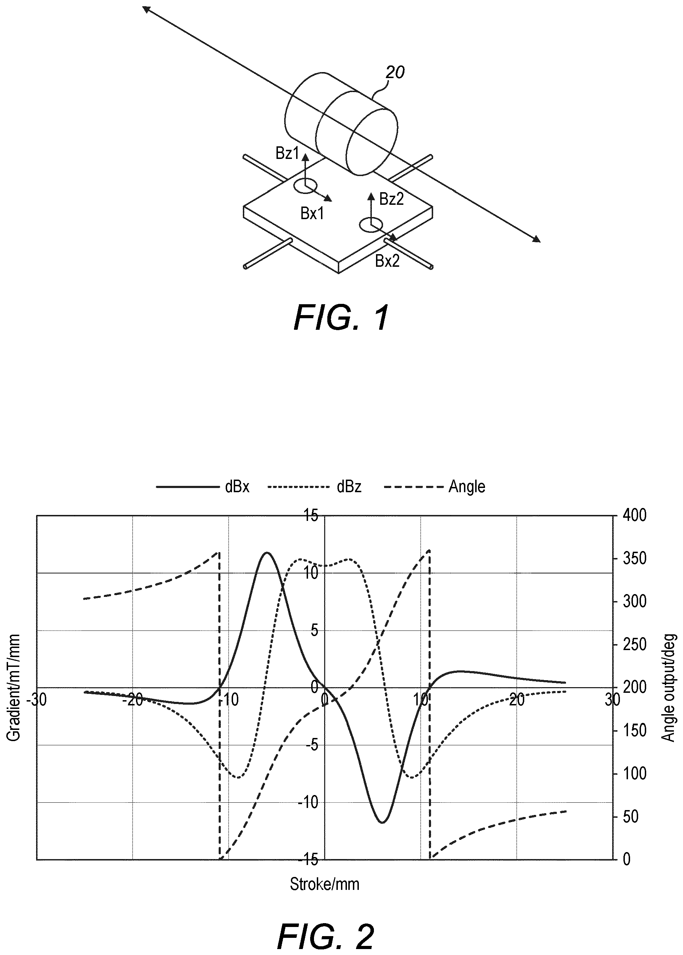

A typical set-up adopted in a linear position sensor circuit with reduced influence of external perturbation fields, is depicted in Fig.1. A magnet (20) moves along an axis indicated by the line provided with arrows at the respective ends, i.e., along the x-axis. The distance over which the magnet is movable, is referred to as the stroke. The determination of the magnet position is based on magnetic field gradients or differences, which allows reducing the effect of the external perturbation magnetic fields (the stray fields). For example, differential sensing is applied : the magnetic field is measured at two sensing spots. The sensors at the two spots detect positionally different magnetic fields. The first spot measures magnetic field components Bx1 and Bz1 and the second measurement spot yields magnetic field components Bx2 and Bz2. The differences between the outputs of the two sensing elements can then be calculated in a processing circuit of the sensor circuit as ΔBx = Bx1- Bx2 and ΔBz = Bz1 - Bz2, which reduces the effect of a constant stray field. ΔBx and ΔBz change along with the position of the magnet. Based on the values of ΔBx and ΔBz an indication of the position of the magnet can be derived, for example via calculation of the expression atan(ΔBx/ΔBz), which yields an angle which is dependent on the stroke (the displacement in the x-direction).

Fig.2 shows the typical behaviour of the sensor circuit depicted in Fig.1. The figure illustrates ΔBx and ΔBz as a function of the displacement in the x-direction in Fig.1. Fig.2 further shows the resulting angle which displays a modulo 2π jump induced by the differential nature of the measurement. Consequently, the displacement of the magnet in these prior art solutions has to be limited in order to avoid the jump in the resulting angle beyond which the position of the magnet cannot be unambiguously derived.

Hence, there is a need for a linear magnetic position sensor circuit wherein the above-mentioned limitations are mitigated or overcome.

### Summary of the invention

It is an object of embodiments of the present invention to provide for a linear magnetic position sensor circuit with an improved output range. It is a further object to provide for a method of determining a position of a magnet with such a linear magnetic position sensor circuit.

The above objective is accomplished by the solution according to the present invention.

In a first aspect the invention relates to a linear magnetic position sensor circuit comprising :
- at least one first sensor arranged to generate a first sensing signal indicative of a first magnetic field gradient of a first magnetic field component oriented in a first direction;
- at least one second sensor arranged to generate a second sensing signal indicative of a second magnetic field gradient of a second magnetic field component oriented in a second direction different from the first direction;
- processing circuit arranged to compute a gradient magnitude value based on said first and said second sensing signal and comprising comparison means for comparing said gradient magnitude value to a first predetermined value.

The processing circuit is further arranged to output a position signal based on a ratio of the first and the second sensing signal if the gradient magnitude value is higher than the first predetermined value and to output a position signal based on a predetermined stored value and/or based on a function of said gradient magnitude value if said gradient magnitude value is lower than the first predetermined value.

The proposed solution indeed allows for a longer output range. This is achieved by providing an output position signal based on a comparison of the gradient magnitude with a preset threshold value. To be more precise, if the gradient magnitude is lower than the first predetermined threshold value, a predetermined position signal is output based on a stored value and/or based on a function of the gradient magnitude. In case the gradient magnitude value is higher than the threshold value, a position signal is output based on a ratio of the two sensing signals. In the latter case the output position signal in fact corresponds to the position signal output in sensor circuits as known in the prior art. The extended output range definitely is a substantial advantage of embodiments of the present invention. It is to be noted that this is achieved while still maintaining a good stray field immunity.

In a preferred embodiment the processing circuit is arranged to compare the gradient magnitude value to a second predetermined value and to output a fault signal if the gradient magnitude value is lower than the second predetermined value.

In advantageous embodiments the first sensor is a first pair of magnetic field sensing elements spaced apart from each other and sensitive to the first magnetic field component and the first sensing signal is derived from a difference between the sensing elements of said first pair. In such embodiments the second sensor is a second pair of magnetic field sensing elements spaced apart from each other and sensitive to the second magnetic field component and the second sensing signal is derived from a difference between the sensing elements of said second pair. In preferred embodiments Hall sensors are employed.

In some embodiments the predetermined value or the function of said gradient magnitude value is stored in a memory of the processing circuit.

In some embodiments the predetermined stored value is a constant value.

Advantageously, the function of the gradient magnitude value is a function of the gradient magnitude value, for example a linear or non-linear function. In one embodiment the function may be a polynomial function. Alternatively, the function may be implemented as a lookup table.

In a preferred embodiment the first direction and the second direction are substantially perpendicular to one another.

In another embodiment the function of the gradient magnitude value is also dependent on a gradient angle.

In one aspect the invention relates to an integrated circuit comprising a linear magnetic position sensor circuit as previously described.

In another aspect the invention relates to a system comprising a linear magnetic position sensor circuit as described above and a magnet. The magnet may for example be a two-pole magnet. In preferred embodiments there is only one sensor circuit, hence with a single substrate along the stroke whereover the magnet moves.

In one embodiment the magnet is movable along a linear path, and the first and the second sensing signal indicative of the first and second magnetic field gradient, respectively, are measured in a direction parallel to the linear path.

In one embodiment the magnet is movable along a linear path between a first end position and a second end position, wherein the first end position is at a location where the gradient field magnitude generated by the magnet is higher than the first predetermined value. The movement of the magnet is in other words blocked at that first end position, even though the gradient field magnitude is still above the first threshold level. The second end position may be at a location where the magnetic field generated by the magnet is higher than the second predetermined value, so that no fault signal is generated.

In yet another aspect the invention relates to a method for determining a position of a magnet with a linear magnetic position sensor circuit as previously described. The method comprises :
- obtaining from a first magnetic field gradient sensor a first sensing signal indicative of a first magnetic field gradient of a first magnetic field component oriented in a first direction and from a second magnetic field gradient sensor a second sensing signal indicative of a second magnetic field gradient of a second magnetic field component oriented in a second direction different from the first direction;
- computing a gradient magnitude value based on the first and said second sensing signal;
- comparing the gradient magnitude value to a first predetermined value;
- outputting a position signal based on a ratio of the first and the second sensing signal if the gradient magnitude value is higher than the first predetermined value and outputting a position signal based on a predetermined stored value and/or based on a function of the gradient magnitude value if the gradient magnitude value is lower than the first predetermined value.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates a linear magnetic position sensor circuit as known in the prior art.
Fig.2 illustrates the behaviour of the sensor circuit of Fig.1.
Fig.3 illustrates a general embodiment of a linear magnetic position sensor circuit according to the invention.
Fig.4 illustrates a possible practical implementation of a linear magnetic position sensor circuit of the present invention.
Fig.5 illustrates the comparison with a predetermined value and the subsequent selection of a position signal to be output.
Fig.6 illustrates an alternative to Fig.5.
Fig.7 illustrates an embodiment where on the end the magnet movement is mechanically blocked.
Fig.8 illustrates a flow chart of a method for determining a position of a magnet according to the invention.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect the invention presents a linear magnetic position sensor circuit which offers improved performance with respect to solutions known in the prior art.

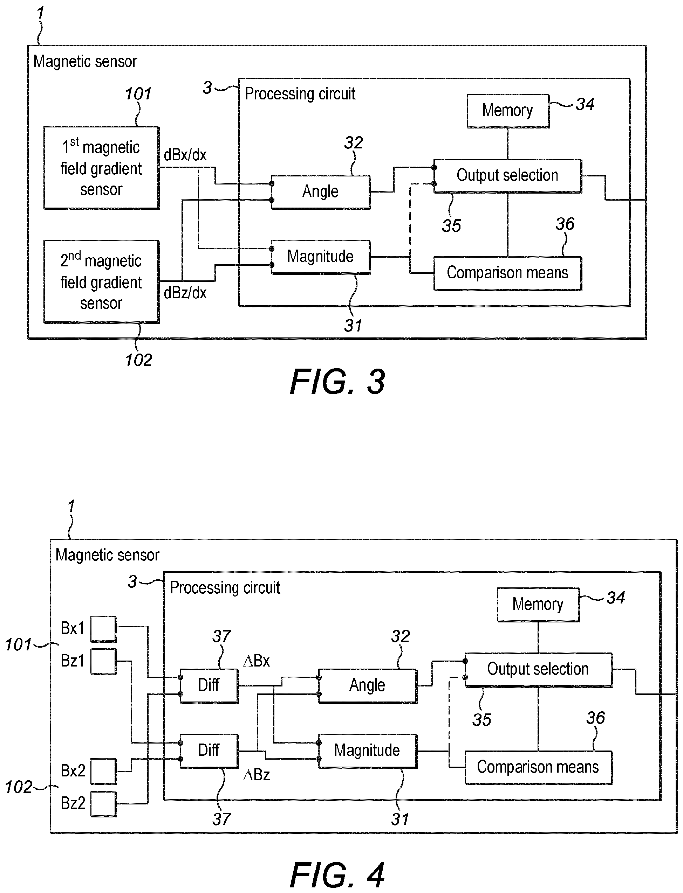

A same set-up as depicted in Fig.1 is considered. A magnet (20) is movable along the x-axis over a maximum distance referred to as the stroke. A block scheme of an embodiment of a linear magnetic position sensor circuit according to the invention is shown in Fig.3. The magnetic field is measured with a first (101) and a second (102) magnetic field gradient sensor. The sensors detect different magnetic field gradients. The first sensor generates a first sensing signal indicative of a first magnetic field gradient of a first magnetic field component oriented in a first direction. A second sensor generates a second sensing signal indicative of a second magnetic field gradient of a second magnetic field component oriented in a second direction different from the first direction. In some embodiments there may be more than one first sensor and/or more than one second sensor. In preferred embodiments the first and the second direction are substantially perpendicular. The first direction is for example the x-direction of Fig.1, which is parallel to the substrate surface, and the second direction the z-direction indicated in Fig.1, which is perpendicular to the substrate surface. The two sensing signals, dBx/dx and dBz/dx, are fed to the processing circuit (3) of the position sensor circuit. In preferred embodiments, the first magnetic field gradient and the second magnetic field gradient are measured in a same direction (dx), for example in the stroke direction (x-direction), but this is not strictly required. The first and second magnetic field gradient sensors can be implemented as transducers which are intrinsically sensitive to magnetic field gradients, for example as a microelectromechanical (MEMS) gradiometers.

The processing circuit (3) may in some embodiments comprise an amplifier (not shown in Fig.3) to amplify the received sensing signals. The processing circuit may further comprise analog-to-digital conversion means (not shown in the figure) for converting the received signals into a digital representation. The analog-to-digital conversion can be performed at different locations in the signal processing chain, for example before processing the difference, or after processing the difference. The difference can be processed either in the analog domain or in the digital domain. In the embodiment illustrated in Fig.3 the amplitude (31) and phase (32) of the received sensing signals are obtained. Based on the magnitude of the two sensing signals a gradient magnitude value is computed in the processing circuit. The gradient magnitude value is in preferred embodiments the sum of the squared amplitudes of the first and second sensing signals, hence dBx² + dBz². In other embodiments the square root of the squared sum may be used. The derived gradient magnitude value is then by means of a comparator (33) compared to a first predetermined value. The processing circuit then decides based on the comparison on the position signal to be output. This is represented in Fig.3 by the output selection block (35). If the gradient magnitude value is higher than the first predetermined value, the output position signal is based on a ratio of the first and the second sensing signal. The output position signal can be an analog signal (e.g., a percentage of a supply voltage, or a PWM signal), or a digital signal (e.g., communicated via a standard digital protocol such as SENT, SPC, SPI, etc.). In a preferred embodiment the output position signal is derived from atan(dBx/dBz) and optionally comprises further linearization. Alternatives are available, however. For example, a look-up table can be used to derive the output position signal from a ratio of gradients. Otherwise, if the gradient magnitude value is lower than the first predetermined value, a position signal is output based on a predetermined stored value and/or based on a function of the gradient magnitude value. Preferably, the output signal is then based solely on the predetermined stored value and/or on a function of the gradient magnitude value, and nothing else than that. In some embodiments the predetermined value and/or said function is stored in a memory (34) that advantageously may be part of the processing circuit. The memory is then in connection with the output selection block to provide the stored value or the function to be used. The function of the gradient magnitude value is for example a linear function of the magnitude, or a non-linear function. In yet other embodiments the function is a polynomial function. Alternatively, a lookup table may be used. The function or lookup table can also be stored in the memory.

A practical implementation of the scheme of Fig.3 is shown in Fig.4. A differential configuration is applied, whereby the sensors (101,102) at the two measurement spots detect positionally different magnetic fields. The first sensor measures magnetic field components Bx1 and Bz1 and the sensor at the second measurement spot yields magnetic field components Bx2 and Bz2. In a preferred embodiment the sensors are Hall-sensors. In the embodiment shown in Fig.4 the differences (37) between the outputs of the two sensing elements are calculated in the processing circuit of the sensor circuit as ΔBx = Bx1- Bx2 and ΔBz = Bz1- Bz2. ΔBx and ΔBz vary as the position of the magnet changes. In one embodiment, the differences may be determined after digitization of the gradient signals. In another embodiment the differences may be determined outside the processing circuit, for example using a switching matrix and by combining the sensing signals in the analog domain, before digitization. Based on the values of ΔBx and ΔBz a gradient magnitude value (e.g., ΔBx² + ΔBz²) is computed and after comparison of that value with the predetermined threshold value or with a function of the threshold value, an indication of the position of the magnet is derived as described above, depending on the outcome of the comparison.

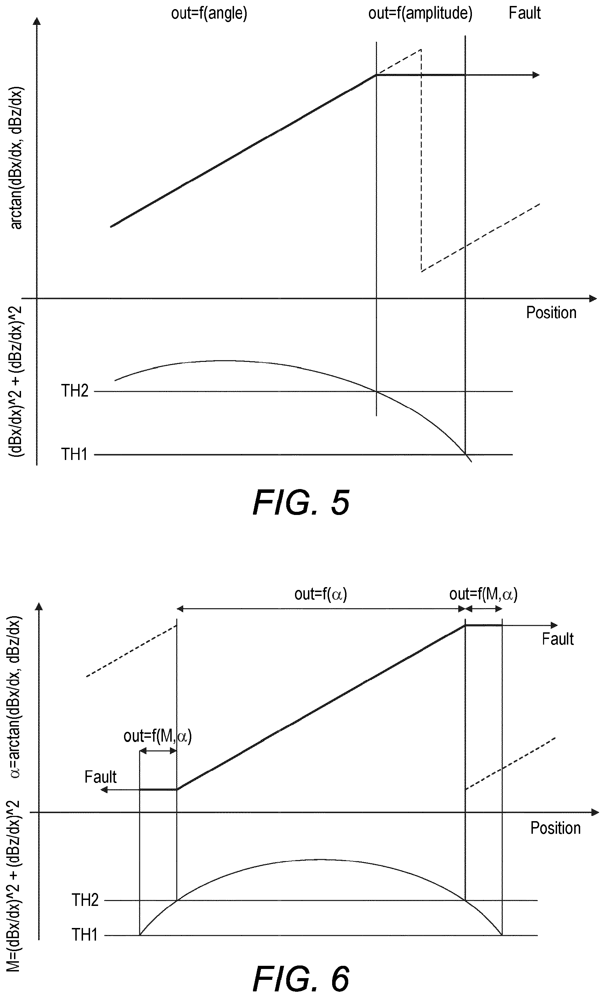

Fig.5 illustrates more in detail the selection of the output signal depending on the comparison result. On the left-hand part of the figure the gradient magnitude value is above the threshold level TH2 and a position signal is output (e.g., in a the linear range). As can be seen in the figure, when the gradient magnitude value, in this particular example dBx² + dBz², drops below the threshold value TH2, the position signal has a constant value that in some embodiments may be stored in memory provided in the processing circuit. As already mentioned, in other embodiments the position signal may be assigned a value based on a function of the gradient magnitude value or a value derived from a lookup table. In some embodiments the function may be a function not only of the gradient magnitude, but also of the gradient phase.

By providing the comparison of the value related to the magnitude of the gradient with a threshold value and an appropriate position signal also when the gradient magnitude value drops below the threshold, an extended output range is obtained. This is a major asset of the position sensor circuit according to this invention.

Fig.6 provides another possible scheme to derive the position signal. In Fig.6 the position signal outputted in the case of a gradient magnitude value lower than the threshold value TH2, is a function not only of the gradient magnitude value, but also of the phase (angle) of the gradient. Hence, a condition on the angle value is used in conjunction with the magnitude value of the gradient in order to determine the position and to set the output position signal (e.g., clamping at high or low level as shown in Fig.6, or output of position as a function of the magnitude and angle). In the particular case illustrated in Fig.6, also on the left-hand side, i.e. at the lower end of the linear range, a position signal is output based on a predetermined stored value and/or a function of said gradient magnitude value and (possibly) of the gradient phase. Note further that in Fig.6, in contrast to Fig.5, the full linear range is exploited.

Fig.5 and Fig.6 further illustrate that in certain embodiments optionally a second predetermined value (indicated as TH1 in the figure, with TH1 < TH2) is provided. Also this second predetermined value may be stored in the memory of the processing circuit. The processing circuit then compares the gradient magnitude value to that second threshold and a fault signal is outputted if the gradient magnitude value drops below TH1.

In advantageous embodiments the first sensor is implemented as a pair of magnetic field sensing elements spaced apart from each other and arranged to sense the first magnetic field component. The first sensing signal can then be derived from the difference between the sensing elements of the pair. The second sensor then is another pair of magnetic field sensing elements spaced apart from each other and sensitive to a second magnetic field component. The second sensing signal can then be derived from the difference between the sensing elements of this other pair. In some embodiments, the distance between the sensing elements of the two pairs of sensing elements is smaller than a magnet dimension extending in the stroke direction (e.g., along the x-direction), or smaller than 50% of a magnetic dimension extending in the stroke direction, or smaller than 25% of a magnet dimension extending in the stroke direction. For example, the spacing between the sensing elements is smaller than 100%, or 50%, or 25% of a length of the magnet in the stroke direction.

In one aspect the invention relates to an integrated circuit comprising a linear magnetic position sensor circuit as described above. Preferably a single integrated circuit is used along the stroke.

In a further aspect the invention relates to a system comprising a linear magnetic position sensor circuit as previously described and a magnet, for example a two-pole magnet, without being limited thereto. The magnetization direction of the magnet can be orthogonal to the stroke, or parallel to the stroke direction. For example, the magnetization direction of the magnet can be parallel to a plane defined in the top surface of the integrated circuit, or perpendicular to a plane defined in the top surface of the integrated circuit.

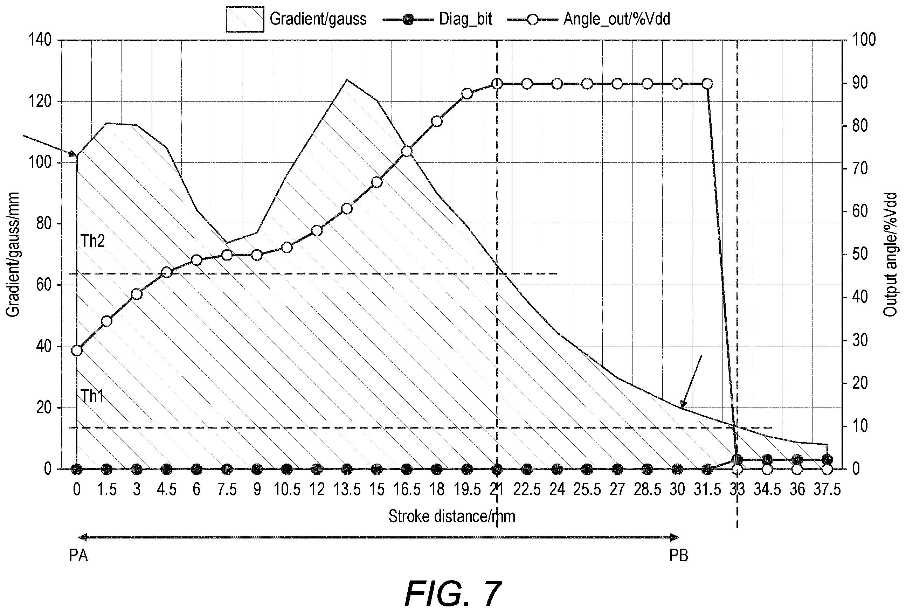

In preferred embodiments the magnet can be moved along a linear path between a first end position and a second end position. The first end position is at a location where the gradient field magnitude generated by the magnet is higher than the first predetermined value. An illustration is provided in Fig.7. In the present example, the output of the integrated circuit is defined as a percentage of the supply voltage, also called ratiometric output. The linear position of the magnet is reported as a signal proportional to a supply voltage of the integrated circuit. As can be observed in Fig.7, the transfer function is not linear in the central portion of the stroke but still strictly monotonic and each position can be unambiguously derived from the output signal. In this figure one end of the magnet stroke is mechanically blocked at position PA where the field strength is higher than the predetermined value TH2. In this case the magnet cannot even reach the zone beyond PA where the gradient magnitude value would fall below the first predetermined value. As shown in the figure, a position signal with clamped output value is used when the gradient magnitude value drops below TH2. This allows obtaining an extended output range.

Additionally, and optionally, the gradient magnitude is compared to a second predetermined value (TH1 in Fig.7), and an error signal is output when the gradient magnitude falls below the second predetermined value (indicating that the magnet may be for example damaged, or out of the sensing range). The error signal can be in the form of a digital signal (e.g., Diag_bit in Fig.7) and/or an analog signal (analog output of the integrated circuit is set to a diagnostic band, e.g., 0V or close to 0V). In some embodiments of the invention, the position PB is mechanically blocked at a location where the gradient magnitude is higher than the second predetermined value, such that TH1 is not crossed in the absence of a failure in the system.

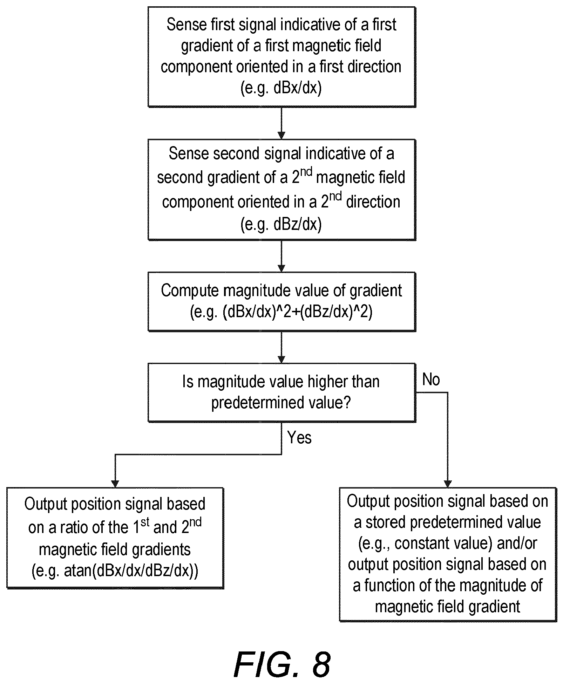

In one aspect the invention relates to a method for determining a position of a magnet by means of a linear magnetic position sensor circuit as previously described. Fig.8 provides a flowchart illustrating an embodiment of the proposed method.

A first signal is sensed indicative of a first gradient of a first magnetic field component oriented in a first direction. In one embodiment this signal can be dBx/dx. A second signal is sensed indicative of a second gradient of a second magnetic field component oriented in a second direction. In one embodiment this second signal can be dBz/dx.

Next a gradient magnitude value can be calculated from the first signal and the second signal. In a preferred embodiment the calculation involves the sum of the squared first and second signals. The gradient magnitude value is then compared to a first predetermined value. In case the gradient magnitude value is higher than that first predetermined value, an output position signal is obtained based on a ratio of the first and the second sensing signal. If on the contrary the gradient magnitude value is smaller than the first predetermined value, the output position signal is based on a stored predetermined value.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope. The invention is defined by the appended claims.

## Claims

1. A linear magnetic position sensor circuit (1) comprising :
- at least one first sensor (101) arranged to generate a first sensing signal indicative of a first magnetic field gradient of a first magnetic field component oriented in a first direction;
- at least one second sensor (102) arranged to generate a second sensing signal indicative of a second magnetic field gradient of a second magnetic field component oriented in a second direction different from the first direction;
- processing circuit (3) arranged to compute a gradient magnitude value based on said first and said second sensing signal and comprising comparison means for comparing said gradient magnitude value to a first predetermined value;
**characterized in that** said processing circuit is further arranged to output a position signal based on a ratio of said first and said second sensing signal if said gradient magnitude value is higher than said first predetermined value and to output a position signal based on a predetermined stored value and/or based on a function of said gradient magnitude value if said gradient magnitude value is lower than said first predetermined value.

2. The linear magnetic position sensor circuit as in claim 1, wherein said processing circuit is arranged to compare said gradient magnitude value to a second predetermined value and to output a fault signal if said gradient magnitude value is lower than said second predetermined value.

3. The linear magnetic position sensor circuit as in claim 1 or 2, wherein said first sensor is a first pair of magnetic field sensing elements spaced apart from each other and sensitive to said first magnetic field component and said first sensing signal is derived from a difference between said sensing elements of said first pair and
wherein said second sensor is a second pair of magnetic field sensing elements spaced apart from each other and sensitive to said second magnetic field component and said second sensing signal is derived from a difference between said sensing elements of said second pair.

4. The linear magnetic position sensor circuit as in any of the previous claims, wherein said predetermined stored value is a constant value.

5. The linear magnetic position sensor circuit as in any of the previous claims, wherein said function of said gradient magnitude value is a linear function of said gradient magnitude value or a lookup table.

6. The linear magnetic position sensor circuit as in any of the previous claims, further comprising a memory (34) for storing said predetermined stored value and/or said function of said gradient magnitude value.

7. The linear magnetic position sensor circuit as in any of the previous claims, wherein said first direction and said second direction are substantially perpendicular to one another.

8. The linear magnetic position sensor circuit as in any of the previous claims, wherein said function of said gradient magnitude value is also dependent on a gradient angle.

9. An integrated circuit comprising a linear magnetic position sensor circuit as in any of the previous claims.

10. A system comprising a linear magnetic position sensor circuit as in any of the previous claims and a magnet (20).

11. The system as in claim 10, wherein said magnet (20) is movable along a linear path, and wherein said first and second sensing signal indicative of the first and second magnetic field gradient, respectively, are measured in a direction parallel to said linear path.

12. The system as in claim 10 or 11, wherein said magnet (20) is movable along a linear path between a first end position and a second end position, wherein said first end position is at a location where the gradient field magnitude generated by said magnet is higher than said first predetermined value.

13. The system as in claim 12, wherein said second end position is at a location where the magnetic field generated by said magnet is higher than said second predetermined value.

14. The system as in any of claims 10 to 13, implemented as a part of a braking system.

15. Method for determining a position of a magnet with a linear magnetic position sensor circuit, comprising :
- obtaining from a first magnetic field gradient sensor a first sensing signal indicative of a first magnetic field gradient of a first magnetic field component oriented in a first direction and from a second magnetic field gradient sensor a second sensing signal indicative of a second magnetic field gradient of a second magnetic field component oriented in a second direction different from said first direction;
- computing a gradient magnitude value based on said first and said second sensing signal;
- comparing said gradient magnitude value to a first predetermined value;
- outputting a position signal based on a ratio of said first and said second sensing signal if said gradient magnitude value is higher than said first predetermined value and outputting a position signal based on a predetermined stored value and/or based on a function of said gradient magnitude value if said gradient magnitude value is lower than said first predetermined value.

## Patentansprüche

1. Eine lineare magnetische Positionssensorschaltung (1), umfassend:
- zumindest einen ersten Sensor (101), welcher dazu angeordnet ist, ein erstes Erfassungssignal zu erzeugen, das auf einen ersten Magnetfeldgradienten einer ersten Magnetfeldkomponente hinweist, welche in einer ersten Richtung orientiert ist;
- zumindest einen zweiten Sensor (102), welcher dazu angeordnet ist, ein zweites Erfassungssignal zu erzeugen, das auf einen zweiten Magnetfeldgradienten einer zweiten Magnetfeldkomponente hinweist, welche in einer zweiten Richtung orientiert ist, welche sich von der ersten Richtung unterscheidet;
- Verarbeitungsschaltung (3), welche dazu angeordnet ist, einen Gradientengrößenwert basierend auf dem ersten und dem zweiten Erfassungssignal zu berechnen, und Vergleichsmittel zum Vergleichen des Gradientengrößenwerts mit einem ersten vorbestimmten Wert umfassend;
**dadurch gekennzeichnet, dass** die Verarbeitungsschaltung weiter dazu angeordnet ist, ein Positionssignal basierend auf einem Verhältnis des ersten und des zweiten Erfassungssignals auszugeben, falls der Gradientengrößenwert größer als der erste vorbestimmte Wert ist, und ein Positionssignal basierend auf einem vorbestimmten gespeicherten Wert und/oder basierend auf einer Funktion des Gradientengrößenwerts auszugeben, falls der Gradientengrößenwert kleiner als der erste vorbestimmte Wert ist.

2. Die lineare magnetische Positionssensorschaltung nach Anspruch 1, wobei die Verarbeitungsschaltung dazu angeordnet ist, den Gradientengrößenwert mit einem zweiten vorbestimmten Wert zu vergleichen und ein Fehlersignal auszugeben, falls der Gradientengrößenwert kleiner als der zweite vorbestimmte Wert ist.

3. Die lineare magnetische Positionssensorschaltung nach Anspruch 1 oder 2, wobei der erste Sensor ein erstes Paar von voneinander beabstandeten und auf die erste Magnetfeldkomponente reagierenden Magnetfelderfassungselementen ist, und das erste Erfassungssignal aus der Differenz zwischen den Erfassungselementen des ersten Paares abgeleitet wird, und
wobei der zweite Sensor ein zweites Paar von voneinander beabstandeten und auf die zweite Magnetfeldkomponente reagierenden Magnetfelderfassungselementen ist, und das zweite Erfassungssignal aus der Differenz zwischen den Erfassungselementen des zweiten Paares abgeleitet wird.

4. Die lineare magnetische Positionssensorschaltung nach einem der vorstehenden Ansprüche, wobei der vorbestimmte gespeicherte Wert ein konstanter Wert ist.

5. Die lineare magnetische Positionssensorschaltung nach einem der vorstehenden Ansprüche, wobei die Funktion des Gradientengrößenwerts eine lineare Funktion des Gradientengrößenwerts oder eine Nachschlagetabelle ist.

6. Die lineare magnetische Positionssensorschaltung nach einem der vorstehenden Ansprüche, weiter einen Speicher (34) zum Speichern des vorbestimmten gespeicherten Wertes und/oder der Funktion des Gradientengrößenwerts umfassend.

7. Die lineare magnetische Positionssensorschaltung nach einem der vorstehenden Ansprüche, wobei die erste Richtung und die zweite Richtung im Wesentlichen senkrecht zueinander sind.

8. Die lineare magnetische Positionssensorschaltung nach einem der vorstehenden Ansprüche, wobei die Funktion des Gradientengrößenwerts auch von einem Steigungswinkel abhängig ist.

9. Eine integrierte Schaltung, umfassend eine lineare magnetische Positionssensorschaltung nach einem der vorstehenden Ansprüche.

10. Ein System, umfassend eine lineare magnetische Positionssensorschaltung nach einem der vorstehenden Ansprüche und einen Magneten (20).

11. Das System nach Anspruch 10, wobei der Magnet (20) entlang einer linearen Bahn beweglich ist, und wobei das erste und zweite Erfassungssignal, welches auf den ersten bzw. zweiten Magnetfeldgradienten hinweist, in einer Richtung parallel zu der linearen Bahn gemessen werden.

12. Das System nach Anspruch 10 oder 11, wobei der Magnet (20) entlang einer linearen Bahn zwischen einer ersten Endposition und einer zweiten Endposition beweglich ist, wobei sich die erste Endposition an einem Ort befindet, an welchem die von dem Magneten erzeugte Gradientenfeldstärke größer ist als der erste vorbestimmte Wert.

13. Das System nach Anspruch 12, wobei sich die zweite Endposition an einem Ort befindet, an welchem das von dem Magneten erzeugte Magnetfeld größer ist als der zweite vorbestimmte Wert.

14. Das System nach einem der Ansprüche 10 bis 13, implementiert als ein Teil eines Bremssystems.

15. Verfahren zum Bestimmen einer Position eines Magneten mit einer linearen magnetischen Positionssensorschaltung, umfassend:
- Erhalten eines erstes Erfassungssignals, das auf einen ersten Magnetfeldgradienten einer ersten Magnetfeldkomponente hinweist, welche in einer ersten Richtung orientiert ist, von einem ersten Magnetfeldgradientensensor, und eines zweiten Erfassungssignals, das auf einen zweiten Magnetfeldgradienten einer zweiten Magnetfeldkomponente hinweist, welche in einer zweiten Richtung orientiert ist, welche sich von der ersten Richtung unterscheidet, von einem zweiten Magnetfeldgradientensensor;
- Berechnen eines Gradientengrößenwerts basierend auf dem ersten und dem zweiten Erfassungssignal;
- Vergleichen des Gradientengrößenwerts mit einem ersten vorbestimmten Wert;
- Ausgeben eines Positionssignals basierend auf einem Verhältnis des ersten und des zweiten Erfassungssignals, falls der Gradientengrößenwert größer als der erste vorbestimmte Wert ist, und Ausgeben eines Positionssignals basierend auf einem vorbestimmten gespeicherten Wert und/oder basierend auf einer Funktion des Gradientengrößenwerts, falls der Gradientengrößenwert kleiner als der erste vorbestimmte Wert ist.

## Revendications

1. Un circuit de capteur de position magnétique linéaire (1) comprenant :
- au moins un premier capteur (101) disposé pour générer un premier signal de détection indicatif d'un premier gradient de champ magnétique d'une première composante de champ magnétique orientée dans une première direction ;
- au moins un second capteur (102) disposé pour générer un second signal de détection indicatif d'un second gradient de champ magnétique d'une seconde composante de champ magnétique orientée dans une seconde direction différente de la première direction ;
- un circuit de traitement (3) disposé pour calculer une valeur de magnitude de gradient basée sur ledit premier et ledit second signal de détection et comprenant des moyens de comparaison pour comparer ladite valeur de magnitude de gradient à une première valeur prédéterminée ;
**caractérisé en ce que** ledit circuit de traitement est en outre disposé pour émettre un signal de position basé sur un rapport dudit premier et dudit second signal de détection si ladite valeur de magnitude de gradient est supérieure à ladite première valeur prédéterminée et pour émettre un signal de position basé sur une valeur prédéterminée stockée et/ou basé sur une fonction de ladite valeur de magnitude de gradient si ladite valeur de magnitude de gradient est inférieure à ladite première valeur prédéterminée.

2. Le circuit de capteur de position magnétique linéaire selon la revendication 1, dans lequel ledit circuit de traitement est disposé pour comparer ladite valeur de magnitude de gradient à une seconde valeur prédéterminée et pour émettre un signal de défaut si ladite valeur de magnitude de gradient est inférieure à ladite seconde valeur prédéterminée.

3. Le circuit de capteur de position magnétique linéaire selon la revendication 1 ou 2, dans lequel ledit premier capteur est une première paire d'éléments de détection de champ magnétique espacés l'un de l'autre et sensibles à ladite première composante de champ magnétique et ledit premier signal de détection est dérivé d'une différence entre lesdits éléments de détection de ladite première paire et dans lequel ledit second capteur est une seconde paire d'éléments de détection de champ magnétique espacés l'un de l'autre et sensibles à ladite seconde composante de champ magnétique et ledit second signal de détection est dérivé d'une différence entre lesdits éléments de détection de ladite seconde paire.

4. Le circuit de capteur de position magnétique linéaire selon l'une quelconque des revendications précédentes, dans lequel ladite valeur prédéterminée stockée est une valeur constante.

5. Le circuit de capteur de position magnétique linéaire selon l'une quelconque des revendications précédentes, dans lequel ladite fonction de ladite valeur de magnitude de gradient est une fonction linéaire de ladite valeur de magnitude de gradient ou une table de consultation.

6. Le circuit de capteur de position magnétique linéaire selon l'une quelconque des revendications précédentes, comprenant en outre une mémoire (34) pour stocker ladite valeur prédéterminée stockée et/ou ladite fonction de ladite valeur de magnitude de gradient.

7. Le circuit de capteur de position magnétique linéaire selon l'une quelconque des revendications précédentes, dans lequel ladite première direction et ladite seconde direction sont sensiblement perpendiculaires l'une à l'autre.

8. Le circuit de capteur de position magnétique linéaire selon l'une quelconque des revendications précédentes, dans lequel ladite fonction de ladite valeur de magnitude de gradient dépend également d'un angle de gradient.

9. Un circuit intégré comprenant un circuit de capteur de position magnétique linéaire selon l'une quelconque des revendications précédentes.

10. Un système comprenant un circuit de capteur de position magnétique linéaire selon l'une quelconque des revendications précédentes et un aimant (20).

11. Le système selon la revendication 10, dans lequel ledit aimant (20) est mobile le long d'un chemin linéaire, et dans lequel ledit premier et ledit second signal de détection indicatif du premier et du second gradient de champ magnétique, respectivement, sont mesurés dans une direction parallèle audit chemin linéaire.

12. Le système selon la revendication 10 ou 11, dans lequel ledit aimant (20) est mobile le long d'un chemin linéaire entre une première position d'extrémité et une seconde position d'extrémité, dans lequel ladite première position d'extrémité est à un emplacement où la magnitude du champ de gradient générée par ledit aimant est supérieure à ladite première valeur prédéterminée.

13. Le système selon la revendication 12, dans lequel ladite seconde position d'extrémité est à un emplacement où le champ magnétique généré par ledit aimant est supérieur à ladite seconde valeur prédéterminée.

14. Le système selon l'une quelconque des revendications 10 à 13, mis en œuvre comme une partie d'un système de freinage.

15. Procédé pour déterminer une position d'un aimant avec un circuit de capteur de position magnétique linéaire, comprenant :
- l'obtention d'un premier signal de détection indicatif d'un premier gradient de champ magnétique d'une première composante de champ magnétique orientée dans une première direction à partir d'un premier capteur de gradient de champ magnétique et d'un second signal de détection indicatif d'un second gradient de champ magnétique d'une seconde composante de champ magnétique orientée dans une seconde direction différente de ladite première direction à partir d'un second capteur de gradient de champ magnétique ;
- le calcul d'une valeur de magnitude de gradient basée sur ledit premier et ledit second signal de détection ;
- la comparaison de ladite valeur de magnitude de gradient à une première valeur prédéterminée ;
- l'émission d'un signal de position basé sur un rapport dudit premier et dudit second signal de détection si ladite valeur de magnitude de gradient est supérieure à ladite première valeur prédéterminée et l'émission d'un signal de position basé sur une valeur prédéterminée stockée et/ou basé sur une fonction de ladite valeur de magnitude de gradient si ladite valeur de magnitude de gradient est inférieure à ladite première valeur prédéterminée.
